# EUROPÄISCHE PATENTSCHRIFT

(11) **EP 3 066 893 B1**
(45) Veröffentlichungstag und Bekanntmachung des Hinweises auf die Patenterteilung: **30.08.2017**
(21) Anmeldenummer: 14806189.8
(22) Anmeldetag: 03.11.2014
(51) Int. Cl.: H04B 5/00, H05B 37/02, H05B 33/08

(54) **MEHRFARBENSIGNALANORDNUNG, VERFAHREN ZUR DEFINITION VON BETRIEBSARTEN EINER MEHRFARBENSIGNALANORDNUNG UND SYSTEM, AUFWEISEND EINE MEHRFARBENSIGNALANORDNUNG UND EINE RFID SENDEEINRICHTUNG**
MULTICOLOR SIGNAL ARRANGEMENT, METHOD FOR DEFINING OPERATING MODES OF A MULTICOLOR SIGNAL ARRANGEMENT, AND SYSTEM HAVING A MULTICOLOR SIGNAL ARRANGEMENT AND AN RFID TRANSMITTING DEVICE
INSTALLATION DE SIGNALISATION À PLUSIEURS COULEURS, PROCÉDÉ PERMETTANT DE DÉFINIR DES MODES DE FONCTIONNEMENT D'UNE INSTALLATION DE SIGNALISATION À PLUSIEURS COULEURS ET SYSTÈME COMPRENANT UNE INSTALLATION DE SIGNALISATION À PLUSIEURS COULEURS ET DISPOSITIF D'ÉMISSION RFID

(30) Priorität: 05.11.2013 DE 102013112127
(43) Veröffentlichungstag der Anmeldung: 14.09.2016
(73) Patentinhaber: Eaton Electrical IP GmbH & Co. KG, 12529 Schönefeld (DE)
(72) Erfinder: REIDT, Georg, 53913 Swisstal (DE)
(74) Vertreter: Eaton IP Group EMEA
(86) Internationale Anmeldenummer: PCT/EP2014/073602
(87) Internationale Veröffentlichungsnummer: WO 2015/067566

(56) Entgegenhaltungen:
- EP-A1- 2 603 055
- DE-A1-102010 005 907
- US-A1- 2008 100 224

## Beschreibung

### Stand der Technik

Die Erfindung geht aus von einer Mehrfarbensignalanordnung nach dem Oberbegriff des Anspruchs 1.

Solche Mehrfarbensignalanordnungen sind allgemein bekannt. Beispielsweise ist aus der Druckschrift EP 2 603 055 A1 eine solche Mehrfarbensignalanordnung bekannt. Es besteht allerdings bei herkömmlichen Mehrfarbensignalanordnungen der Nachteil, dass die Betriebsarten frühzeitig bereits bei der Herstellung der Mehrfarbensignalanordnung definiert werden müssen und nachträglich nicht mehr definiert bzw. verändert werden können, sodass es nicht mehr möglich ist, die Betriebsarten an die Bedürfnisse bzw. Erfordernisse bei der späteren Verwendung anzupassen. Es besteht daher das dringende Bedürfnis, die Betriebsarten auch nachträglich noch definieren zu können.

Es ist daher die Aufgabe der vorliegenden Erfindung, eine Mehrfarbensignalanordnung zur Verfügung zu stellen, die die Nachteile des Stands der Technik nicht aufweist, und deren Betriebsarten insbesondere auch nachträglich noch definiert werden können.

### Offenbarung der Erfindung

Die vorliegende Aufgabe wird mit der Mehrfarbensignalanordnung gemäß Anspruch 1 gelöst. Die Aufgabe wird dadurch gelöst, dass die Mehrfarbensignalanordnung eine RFID Einrichtung aufweist, wobei die Mehrfarbensignalanordnung derart konfiguriert ist, dass die RFID Einrichtung die Betriebsartendefinitionsinformationen empfängt, dass die Betriebsartendefinitionsinformationen an die Mikrokontrolleinrichtung übertragen werden und dass die Mikrokontrolleinrichtung die Betriebsarten in Abhängigkeit der Betriebsartendefinitionsinformationen definiert.

Die erfindungsgemäße Mehrfarbensignalanordnung hat gegenüber dem Stand der Technik den Vorteil, dass die Betriebsarten der Mehrfarbensignalanordnung auch noch nachträglich, das heißt insbesondere nach der Fertigung der Mehrfarbensignalanordnung, definiert werden können. Dadurch ist es vorteilhaft möglich, die Betriebsarten der Mehrfarbensignalanordnung flexibel an die gewünschte bzw. geforderte Verwendung anzupassen und die Betriebsarten auch nachträglich noch verändern zu können. Die Definition der Betriebsarten kann zum Beispiel nach der Fertigung der Mehrfarbensignalanordnung im Werk erfolgen, bevor die Mehrfarbensignalanordnung an den Nutzer ausgeliefert wird. Dazu wird die Mehrfarbensignalanordnung identifiziert und die Betriebsarten werden zum Beispiel durch eine RFID Sendeeinrichtung bzw. einen RFID Schreiber, der die Betriebsartendefinitionsinformationen an die RFID Einheit sendet, nach den Nutzerwünschen definiert. Die Definition der Betriebsarten kann aber zum Beispiel auch erst beim Nutzer stattfinden. Der Nutzer selbst kann zum Beispiel mit einem RFID Schreiber die Betriebsarten definieren. Die Definition der Betriebsarten kann einmalig erfolgen. Die Definition der Betriebsarten kann aber auch mehrmalig durchgeführt werden. So können zum Beispiel die Betriebsarten verändert bzw. umdefiniert werden.

Die RFID (radio frequency identification) Technologie an sich ist aus dem Stand der Technik bekannt. Es hat sich jedoch überraschenderweise gezeigt, dass die RFID Einrichtung vorteilhafterweise in der Lage ist, Betriebsartendefinitionsinformationen zu empfangen, an die Mikrokontrolleinrichtung zu übertragen und dadurch die Definition der Betriebsarten durch die Mikrokontrolleinrichtung zu ermöglichen. Außerdem ist die RFID Einrichtung eine überaus effiziente Möglichkeit, die Betriebsartendefinitionsinformationen zu verarbeiten und an eine Mikrokontrolleinrichtung weiterzugeben. Weiterhin ist die RFID Einrichtung sparsam, was den Energieverbrauch betrifft, so dass zur Definition der Betriebsarten keine zusätzliche Energiequelle bereitgestellt werden muss. Es reicht aus, wenn zum Beispiel von einer RFID Sendereinheit die Energie der RFID Einrichtung bereitgestellt werden kann.

Es kann zum Beispiel insbesondere vorgesehen sein, dass die RFID Einrichtung als NFC (near field communication) Einrichtung ausgebildet ist. Dadurch ist es zum Beispiel vorteilhaft möglich, mit einem Smartphone oder einem Handy, welches eine NFC Schnittstelle aufweist, die Betriebsartendefinitionsinformationen an die RFID Einrichtung bzw. NFC Einrichtung zu übertragen.

Die Mehrfarbensignalanordnung empfängt pulsweitenmodulierte Steuersignale an einer Eingangsschnittstelle zum Beispiel von einem intelligenten Schaltgerät. Dabei kann es sich zum Beispiel um speicherprogrammierbare Steuerungen handeln (SPS). Die pulsweitenmodulierten Steuersignale können grundsätzlich jede beliebige Ausgestaltung haben, die sich mit der Pulsweitenmodulation erzeugen lassen.

Nur beispielhaft seien hier pulsweitenmodulierte Steuersignale genannt, die jeweils eine Signallänge von 100 ms, 200 ms, 300 ms bis 1000 ms aufweisen. Durch diese Einteilung können zum Beispiel auf einer Maximallänge von 1000 ms (was einer Grundfrequenz von 1 Hz entspricht) zehn unterschiedliche Steuersignale gesendet werden. Ein weiteres Steuersignal kann zum Beispiel das Nullsignal oder Aus-Signal sein, mit dem die Mehrfarbensignalanordnung bzw. die Mehrfarben-LED ausgeschaltet wird. Als Übertragungsgröße der Steuersignale kann zum Beispiel die Spannung und/oder der Strom verwendet werden. Der Vorteil bei pulsweitenmodulierten Steuersignalen ist, dass zum Beispiel ein einfacher digitaler Steuerausgang mit 24 VDC einer SPS genutzt werden kann, um die Mehrfarbensignalanordnung ansteuern zu können. Dadurch ist eine besonders effiziente Verbindung der Mehrfarbensignalanordnung zum Beispiel an eine SPS oder auch an ein intelligentes Schaltgerät möglich. Eine zusätzliche Busverbindung oder sonstige Datenverbindung ist nicht erforderlich.

Es sei darauf hingewiesen, dass die Begriffe "erste(s)" und "zweite(s)" keine zeitliche Reihenfolge beschreiben. Diese Begriffe dienen lediglich der Unterscheidung von verschiedenen Steuersignalen bzw. Betriebsarten. Das erste Steuersignal unterscheidet sich vom zweiten Steuersignal. Dem ersten Steuersignal wird die erste Betriebsart und dem zweiten Steuersignal wird die zweite Betriebsart zugeordnet. Die Mehrfarbensignalanordnung bzw. die Eingangsschnittstelle ist jedoch nicht auf den Empfang von lediglich zwei Steuersignalen beschränkt. Es kann auch vorgesehen sein, dass sie drei, vier, fünf oder mehr Steuersignale empfängt.

Wenn die Eingangsschnittstelle das erste Steuersignal empfängt, wird die Mehrfarben-LED in der ersten Betriebsart betrieben, bzw. die Mikrokontrolleinrichtung betreibt die Mehrfarben-LED in der ersten Betriebsart, so dass z.B. ein rotes Blinklicht erzeugt wird. Wenn die Eingangsschnittstelle das zweite Steuersignal empfängt, wird die Mehrfarben-LED in der zweiten Betriebsart betrieben bzw. die Mikrokontrolleinrichtung betreibt die Mehrfarben-LED in der zweiten Betriebsart, so dass zum Beispiel ein gelbes Dauerlicht erzeugt wird. Wenn die Eingangsschnittstelle ein drittes Steuersignal empfängt, kann die Mehrfarben-LED in einer dritten Betriebsart betrieben werden, wenn die Eingangsschnittstelle ein viertes Steuersignal empfängt, kann die Mehrfarben-LED in einer vierten Betriebsart betrieben werden, usw. Die Mehrfarbensignalanordnung ist nicht auf zwei Betriebsarten beschränkt, die Mehrfarben-LED kann auch in drei, vier, fünf oder mehr Betriebsarten betrieben werden. Wenn zum Beispiel die Eingangsschnittstelle sechs Steuersignale empfängt bzw. zum Empfang von sechs Steuersignalen konfiguriert ist, kann die Mehrfarben-LED in sechs unterschiedlichen Betriebsarten betrieben werden.

Die Betriebsarten geben die Art und Weise vor, wie die Mehrfarben-LED betrieben wird. Die Betriebsarten können unterschiedliche Farben, unterschiedliche Leuchtmuster und/oder unterschiedliche Spezialeffekte aufweisen. Die Farben sind diejenigen Farben, die die Mehrfarben-LED erzeugen kann. Nur beispielhaft sei hier rot, grün, blau und gelb genannt. Es sind aber auch grundsätzlich alle anderen Farben möglich. Die unterschiedlichen Leuchtmuster geben an, auf welche Art und Weise die Mehrfarben-LED im Hinblick auf den zeitlichen Ablauf betrieben wird. Nur beispielhaft sei hier das Dauerlicht, dass Blinklicht, dass Pulslicht und/oder sonstige Spezialeffekte genannt. Mit Blinklicht ist zum Beispiel gemeint, dass die Mehrfarben-LED abwechselnd leuchtet und ausgeschaltet ist. Es kann sein, dass die Leuchtzeit, das heißt die Zeit, die die Mehrfarben-LED leuchtet, und die Auszeit, d.h. die Zeit in der die Mehrfarben-LED ausgeschaltet ist, gleich lang sind. Beim Pulslicht kann es zum Beispiel sein, dass die Mehrfarben-LED mehrfach hintereinander kurz aufleuchtet und sich danach eine längere Pause bzw. Auszeit anschließt. Bei den Spezialeffekten kann es sich grundsätzlich um jede Art und Weise handeln, wie die Mehrfarben-LED über den Zeitverlauf mit unterschiedlichen Farben angesteuert werden kann. Unter Spezialeffekten können zum Beispiel Kombinationen oder zeitliche Variationen aus Blinklicht, Pulslicht und/oder zeitlich veränderter Leuchtintensität und/oder abwechselnde Farben verstanden werden.

Eine einzelne Betriebsart kann sich zum Beispiel aus einer Farbe und einem Leuchtmuster zusammensetzen. Wenn zum Beispiel die Farbe Rot und das Leuchtmuster "Blinklicht" vorgegeben wird, so kann zum Beispiel die Betriebsart "rotes Blinklicht" definiert werden. Wenn zum Beispiel die Farbe Gelb und das Leuchtmuster "Dauerlicht" vorgegeben werden, so kann zum Beispiel die Betriebsart "gelbes Dauerlicht" definiert werden. Mit Definition der Betriebsarten ist gemeint, dass zum Beispiel die Farbe und/oder das Leuchtmuster im Rahmen der Betriebsartendefinitionsinformationen vorgegeben und an die RFID Einrichtung übertragen wird. Die vorgegebene Farbe und/oder das vorgegebene Leuchtmuster wird dann zum Beispiel von der Mikrokontrolleinrichtung der Betriebsart zugeordnet und abgespeichert. Wenn dann das Steuersignal empfangen wird, das dieser Betriebsart zugeordnet ist, kann die vorgegebene Farbe und/oder das vorgegebene Leuchtmuster von der Mikrokontrolleinrichtung abgerufen werden, so dass die Mehrfarben-LED in dieser Betriebsart mit der vorgegebenen Farbe und/oder dem vorgegebenen Leuchtmuster betrieben wird.

Vorteilhafte Ausgestaltungen und beispielhafte Weiterbildungen der Erfindung sind den Unteransprüchen, sowie im Folgenden der Beschreibung unter Bezugnahme auf die Zeichnungen entnehmbar.

Gemäß einer beispielhaften Weiterbildung ist vorgesehen, dass die Betriebsartendefinitionsinformationen eine Farbinformation umfassen. Die Farbinformation beinhaltet zum Beispiel die Farbe Rot, Grün oder Blau. Die Farbinformation gibt zum Beispiel an, durch welche Farbe die Betriebsart definiert werden soll bzw. in welcher Farbe die Mehrfarben-LED betrieben wird, wenn die entsprechende Betriebsart verwendet wird. Die Farbinformation kann auch mehrere Farben umfassen, so dass zum Beispiel eine Betriebsart durch mehrere Farben definiert werden kann. Die Farbinformation kann auch zur Definition von mehreren Betriebsarten für jede einzelne Betriebsart eine oder mehrere Farben umfassen.

Gemäß einer anderen beispielhaften Weiterbildung ist vorgesehen, dass die Betriebsartendefinitionsinformationen eine Leuchtmusterinformation umfassen. Die Leuchtmusterinformation kann zum Beispiel die Information "Blinklicht" und/oder "Pulslicht" umfassen. Die Leuchtmusterinformation gibt zum Beispiel an, in welchem zeitlichen Ablaufmuster die Mehrfarben-LED angesteuert wird. Die Leuchtmusterinformation kann zum Beispiel für eine Betriebsart ein oder mehrere Leuchtmuster umfassen. Die Leuchtmusterinformation kann aber auch zur Definition von mehreren Betriebsarten für jede Betriebsart ein oder mehrere Leuchtmuster umfassen.

Gemäß einer anderen beispielhaften Ausführungsform ist vorgesehen, dass die Mehrfarbensignalanordnung derart konfiguriert ist, dass in der Mikrokontrolleinrichtung vorgegebene Leuchtmuster, Farben und/oder Spezialeffekte gespeichert sind, wobei die Betriebsartendefinitionsinformationen eine Zuordnungsinformation umfassen, wobei die Mikrokontrolleinrichtung der Zuordnungsinformation ein gespeichertes Leuchtmuster, eine gespeicherte Farbe und/oder einen gespeicherten Spezialeffekt zuordnet, wobei die Mikrokontrolleinrichtung die Betriebsart durch das zugeordnete Leuchtmuster, die zugeordnete Farbe und/oder den zugeordneten Spezialeffekt definiert.

Die Zuordnung der Zuordnungsinformation zu dem gespeicherten Leuchtmuster, der gespeicherten Farbe und/oder dem gespeicherten Spezialeffekt kann z.B. über eine sog. Nachschautabelle (look-up table) erfolgen.

Durch diese Ausgestaltung ist es möglich, zum Beispiel Leuchtmuster, Farben aber auch Spezialeffekte, die auch sehr komplex sein können, bei der Herstellung der Mehrfarbensignalanordnung bereits vorzugeben. Dadurch können z.B. Default-Einstellungen werksseitig vorgegeben werden. Die Mikrokontrolleinrichtung weist einen Speicher auf, in dem vorgegebene Leuchtmuster, Farben und/oder Spezialeffekte gespeichert werden können. Diese gespeicherten Leuchtmuster, Farben und/oder Spezialeffekte sind abrufbar und können den Betriebsarten zugeordnet werden. In der Zuordnungsinformation kann zum Beispiel übermittelt werden, welche Betriebsart durch welches Leuchtmuster, welche Farbe und/oder welchen Spezialeffekt definiert werden soll.

Gemäß einer anderen beispielhaften Ausführungsform ist vorgesehen, dass die Betriebsartendefinitionsinformationen einen Datensatz umfassen, wobei der Datensatz eine Betriebsartidentifikationsinformation, eine Farbinformation, eine Leuchtmusterinformation und/oder eine Zuordnungsinformation umfasst. Die Betriebsartendefinitionsinformationen können einen oder auch mehrere Datensätze umfassen. Die Betriebsartidentifikationsinformation dient der Identifikation derjenigen Betriebsart, die definiert werden soll. So kann die Betriebsartidentifikationsinformation zum Beispiel die Nummer der Betriebsart enthalten. Zusätzlich zur Betriebsartidentifikationsinformation enthält der Datensatz eine Farbinformation, eine Leuchtmusterinformation und/oder eine Zuordnungsinformation. Dadurch wird eindeutig beschrieben, welche Betriebsart durch welche Farbe, welches Leuchtmuster und/oder welchen Spezialeffekt definiert werden soll. Der Datensatz kann die Betriebsartidentifikationsinformation und eine oder zwei oder alle Informationen aus der Gruppe der Farbinformation, Leuchtmusterinformation und Zuordnungsinformation enthalten.

Gemäß einer anderen beispielhaften Ausführungsform ist vorgesehen, dass die Betriebsarten über die RFID Einrichtung mehrmalig definierbar und/oder veränderbar sind. Wenn zum Beispiel eine Betriebsart bereits einmal definiert worden ist, so ist es möglich, die Betriebsart erneut zu definieren. So ist es möglich die Betriebsart lediglich zu verändern oder komplett neu zu definieren. So kann zum Beispiel lediglich die Farbe der Betriebsart verändert werden, es kann aber auch die komplette Betriebsart zum Beispiel von einem gelben Blinklicht zu einem roten Dauerlicht verändert werden.

Gemäß einer anderen beispielhaften Ausführungsform ist vorgesehen, dass die Mehrfarbensignalanordnung derart konfiguriert ist, dass die RFID Einrichtung zusätzlich, d.h. zusätzlich zu den Betriebsartendefinitionsinformationen, Steuersignaldefinitionsinformationen empfängt, wobei die RFID Einrichtung die Steuersignaldefinitionsinformationen an die Mikrokontrolleinrichtung sendet und die Steuersignale in Abhängigkeit der Steuersignaldefinitionsinformationen definiert und/oder verändert werden. Damit ist gemeint, dass die Steuersignale, die den Betriebsarten zugeordnet sind, auch nachträglich noch über die RFID Einrichtung definiert bzw. verändert werden können. Wenn zum Beispiel der Betriebsart Nr. 5 das Steuersignal mit der Pulsweite 500 ms zugeordnet ist bzw. war, so kann über die RFID Einrichtung das Steuersignal verändert werden, so dass zum Beispiel dieser Betriebsart Nr. 5 ein Steuersignal mit der Pulsweite 800 ms zugeordnet wird. Auch diese Definition der Steuersignale kann einmalig aber auch mehrmalig erfolgen. Diese Definition kann zum Beispiel im Werk nach der Herstellung der Mehrfarbensignalanordnung erfolgen, sie kann aber auch beim Nutzer bzw. durch den Nutzer erfolgen. Dadurch ist es vorteilhaft möglich, die Steuersignale flexibel an die Erfordernisse des Nutzers anzupassen.

Gemäß einer anderen beispielhaften Ausführungsform ist vorgesehen, dass die RFID Einrichtung als Mikrochip ausgebildet ist. Durch die Ausbildung als Mikrochip ist eine besonders kompakte Bauweise möglich. Dadurch ist eine besonders bauraumsparende Realisierung der Mehrfarbensignalanordnung erreichbar. Des Weiteren kann beispielhaft vorgesehen sein, dass die RFID Einrichtung über eine I2C (Inter Integrated Circuit) Schnittstelle mit der Mikrokontrolleinrichtung verbunden ist. Es könnte aber auch zum Beispiel eine SPI (Serial Peripheral Interface) Schnittstelle und/oder eine UART (Universal Asynchronous Receiver Transmitter) Schnittstelle verwendet werden. Des Weiteren kann es vorgesehen sein, dass die RFID Einrichtung und die Mikrokontrolleinrichtung auf einer gemeinsamen Leiterplatte in einem gemeinsamen Gehäuse angeordnet sind. Dadurch ist eine besonders effiziente und bauraumsparende Realisierung der Mehrfarbensignalanordnung möglich.

Ein weiterer Gegenstand der vorliegenden Erfindung betrifft ein Verfahren zur Definition von Betriebsarten einer Mehrfarbensignalanordnung, aufweisend eine Mehrfarben-LED, eine Mikrokontrolleinrichtung und eine Eingangsschnittstelle, wobei die Eingangsschnittstelle pulsweitenmodulierte Steuersignale empfängt, wobei die Mehrfarben-LED in einer ersten Betriebsart betrieben wird, wenn die Eingangsschnittstelle ein erstes Steuersignal empfängt, wobei die Mehrfarben-LED in einer zweiten Betriebsart betrieben wird, wenn die Eingangsschnittstelle ein zweites Steuersignal empfängt, wobei die Mehrfarbensignalanordnung eine RFID Einrichtung aufweist, wobei die RFID Einrichtung Betriebsartendefinitionsinformationen empfängt, wobei die Betriebsartendefinitionsinformationen an die Mikrokontrolleinrichtung übertragen werden und die Mikrokontrolleinrichtung die Betriebsarten in Abhängigkeit der Betriebsartendefinitionsinformationen definiert.

Des Weiteren wird auf die Ausführungen zur Mehrfarbensignalanordnung verwiesen. Auch hinsichtlich beispielhafter Ausführungsformen wird auf die obigen Beispiele verwiesen. Die dortigen Sachverhalte gelten auch für dieses Verfahren.

Ein weiterer Gegenstand der vorliegenden Erfindung betrifft ein System, aufweisend eine Mehrfarbensignalanordnung wie zuvor beschrieben und eine RFID Sendeeinrichtung, wobei die RFID Sendeeinrichtung derart konfiguriert ist, dass sie die Betriebsartendefinitionsinformationen an die RFID Einrichtung sendet.

Bei der RFID Sendeeinrichtung kann es sich zum Beispiel um einen herkömmlichen RFID Schreiber handeln. Es könnte sich aber zum Beispiel auch um ein Smartphone oder Ähnliches handeln. Des Weiteren wird auf die Ausführungen zur Mehrfarbensignalanordnung verwiesen. Auch hinsichtlich beispielhafter Ausführungsformen wird auf die obigen Beispiele verwiesen. Die dortigen Sachverhalte gelten auch für dieses System.

Ausführungsbeispiele der vorliegenden Erfindung sind in den Zeichnungen dargestellt und in der nachfolgenden Beschreibung näher erläutert.

### Kurze Beschreibung der Zeichnungen

Es zeigen
Figur 1 ein Blockschaltbild einer Mehrfarbensignalanordnung gemäß einer beispielhaften Ausführungsform,
Figur 2 und Figur 3 jeweils ein Steuersignal für eine Mehrfarbensignalanordnung gemäß einer beispielhaften Ausführungsform der vorliegenden Erfindung und
Figuren 4-14 beispielhafte Leuchtmuster.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

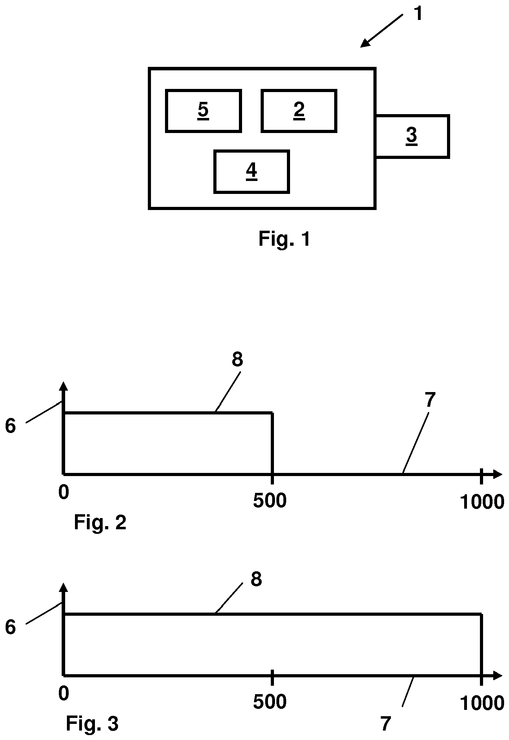

Figur 1 zeigt eine Mehrfarbensignalanordnung 1 gemäß einer beispielhaften Ausführungsform der vorliegenden Erfindung. Die Mehrfarbensignalanordnung 1 weist eine Mikrokontrolleinrichtung 2, eine Mehrfarben-LED 3 (zum Beispiel eine RGB LED), eine RFID Einrichtung 4 und eine Eingangsschnittstelle 5 auf.

Solch eine Mehrfarbensignalanordnung 1 kann zum Beispiel als Bedien- und Diagnosesystem für intelligente Schaltgeräte verwendet werden. So können zum Beispiel Informationen vom Schaltgerät an den Bediener und/oder das Wartungspersonal weitergegeben werden. Die Mehrfarbensignalanordnung ist derart konfiguriert, dass sie z.B. verschiedene Farb- und Blinkmuster anzeigen kann. So können zum Beispiel verschiedene Maschinenzustände oder Änderungen von Maschinenzuständen angezeigt werden.

Die Mehrfarbensignalanordnung 1 ist derart konfiguriert, dass die Eingangsschnittstelle 5 pulsweitenmodulierte Steuersignale empfängt. Solche Steuersignale können zum Beispiel von einer SPS Anlage gesendet werden. Die Eingangsschnittstelle 5 kann zum Beispiel über einen 24 VDC Steuerausgang angesteuert werden. Dadurch ist vorteilhaft keine Feldbus- oder Datenschnittstelle notwendig. Die Mehrfarbensignalanordnung 1 kann dadurch an jedes beliebige Steuerungssystem angeschlossen werden. Bei einer Grundfrequenz von z.B. 1 Hz und einem Puls-/Pausenverhältnis von 100 ms lassen sich in diesem Beispiel elf verschiedene Steuersignale übertragen. Diesen elf Steuersignalen können elf Betriebsarten zugeordnet werden. Einer dieser Betriebsarten kann ein Aus-Modus sein, damit die Mehrfarbensignalanordnung 1 bzw. die Mehrfarben-LED 3 ganz ausgeschaltet werden kann. Die übrigen zehn Steuersignale können zehn verschiedenen Betriebsarten zugeordnet werden.

Die RFID Einrichtung 4 kann zum Beispiel als Mikrochip ausgebildet sein. Außerdem kann die RFID Einrichtung 4 über z.B. eine I2C (Inter Integrated Circuit) Schnittstelle mit der Mikrokontrolleinrichtung 2 verbunden sein. Die RFID Einrichtung 4 empfängt Betriebsartenparametersignale. Die Betriebsartenparametersignale können zum Beispiel von einem RFID Schreiber und/oder von einem Smartphone mit RFID Schreiberfunktion an die RFID Einrichtung 4 gesendet werden. Das Senden der Betriebsartenparametersignale an die RFID Einrichtung 4 kann sowohl unmittelbar nach der Herstellung der Mehrfarbensignalanordnung 1 als auch erst später beim Verwender der Mehrfarbensignalanordnung 1 erfolgen. Das Senden der Betriebsartenparametersignale an die RFID Einrichtung 4 kann nicht nur einmal sondern auch mehrfach erfolgen. Dadurch können die Betriebsarten beliebig verändert werden.

Figur 2 zeigt schematisch ein pulsweitenmoduliertes Steuersignal für eine Mehrfarbensignalanordnung 1 gemäß einer weiteren beispielhaften Ausführungsform. Auf der horizontalen Achse 7 ist die Zeit in Millisekunden (ms) aufgetragen. Auf der vertikalen Achse 6 ist in diesem Beispiel die Spannung (V) aufgetragen. Diesem Steuersignal liegt eine Grundfrequenz von 1 Hz bei einem Puls-/Pausenverhältnis von 100 ms zu Grunde. Bei diesem Steuersignal wird für 500 ms eine konstante Spannung mit der Amplitude 8 übertragen.

Figur 3 zeigt schematisch einen anderes pulsweitenmoduliertes Steuersignal für die Mehrfarbensignalanordnung 1. Auch diesem Steuersignal liegt eine Grundfrequenz von 1 Hz bei einem Puls-/Pausenverhältnis von 100 ms zu Grunde. Bei diesem Steuersignal wird für 1000 ms eine konstante Spannung mit der Amplitude 8 übertragen.

Im Folgenden soll ein Beispiel angegeben werden, wie Steuersignale für die Mehrfarbensignalanordnung 1 aussehen können. In diesem Beispiel beträgt die maximale Signallänge 1000 ms. Diese maximale Signallänge wird in zehn Teile unterteilt, so dass jedes einzelne Signal ein Vielfaches von 100 ms Signallänge aufweist. Somit passen zehn Signale in die maximale Signallänge 1000 ms hinein. Hinzukommt ein Signal, das so genannte Aus-Signal, bei dem kein Signalpegel übertragen wird. Es gibt also in diesem Beispiel elf Steuersignale. Die Steuersignale werden von 0 bis 10 durchnummeriert.

Die folgende Tabelle beinhaltet in der ersten Spalte von links die Nummer des Steuersignals. In der zweiten Spalte ist der negative bzw. untere Grenzwert der Signallänge für jedes Signal enthalten, in der dritten Spalte ist der Mittelwert der Signallänge für jedes Signal enthalten und in der vierten Spalte ist der positive bzw. obere Grenzwert der Signallänge für jedes Signal enthalten.

**Tab. 1: Steuersignale**

| Steuersignal Nr. | Signallänge Unterer Grenzwert [ms] | Signallänge Mittelwert [ms] | Signallänge Oberer Grenzwert [ms] |
|---|---|---|---|
| 0 | 0 | 0 | 0 |
| 1 | 51 | 100 | 150 |
| 2 | 151 | 200 | 250 |
| 3 | 251 | 300 | 350 |
| 4 | 351 | 400 | 450 |
| 5 | 451 | 500 | 550 |
| 6 | 551 | 600 | 650 |
| 7 | 651 | 700 | 750 |
| 8 | 751 | 800 | 850 |
| 9 | 851 | 900 | 950 |
| 10 | 951 | 1000 | 1050 |

Das Steuersignal 0 entspricht dem Aus-Signal. Beim Steuersignal 0 wird die Spannung 0 übertragen. Bei diesem Steuersignal 0 wird die Mehrfarben-LED 3 ausgeschaltet. Das Steuersignal 1 weist einen Mittelwert von 100 ms auf. Außerdem weist das Steuersignal 1 einen unteren Grenzwert von 51 ms und einen oberen Grenzwert von 150 ms auf. Durch den unteren Grenzwert und den oberen Grenzwert wird eine Toleranzbandbreite definiert. Dieses ist besonders vorteilhaft für SPS Anlagen, die eine typische Zykluszeit von 10 bis 20 ms haben. Mit Zykluszeit ist gemeint, dass der Steuerausgang der SPS Anlage nicht schneller als in einer Zeitdauer von 20 ms gesetzt werden kann. Außerdem können durch diese Toleranzbandbreite Schwankungen bzw. Jitter in der Signallänge berücksichtigt werden. Die Eingangsschnittstelle ist dementsprechend derart ausgelegt, dass zum Beispiel ein empfangenes Steuersignal von 430 ms Signallänge als Steuersignal Nr. 4 erkannt wird. Denn 430 ms liegt unterhalb des oberen Grenzwerts von Steuersignal Nr. 4 und wird daher von der Eingangsschnittstelle dem Steuersignal Nr. 4 zugeordnet.

Im Folgenden werden Leuchtmuster angegeben, die im Rahmen der Betriebsartendefinitionsinformationen von einer RFID Sendeeinrichtung an die RFID Einrichtung 4 gesendet werden können.

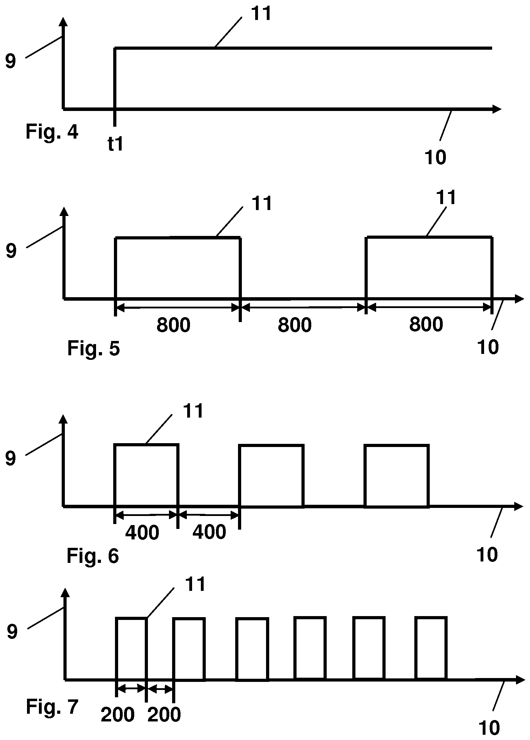

Figur 4 zeigt die Darstellung eines beispielhaften Leuchtmusters. Dieses Leuchtmuster wird im Folgenden auch Dauerlicht genannt. Ein solches Leuchtmuster bzw. eine Leuchtmusterinformation, die ein solches Leuchtmuster umfasst, kann im Rahmen der Betriebsartendefinitionsinformationen von einem RFID Schreiber an die RFID Einrichtung 4 gesendet werden. Die Leuchtmusterinformation wird an die Mikrokontrolleinrichtung 2 übertragen. Die Betriebsarten können nun derart definiert werden, dass einer oder mehrere Betriebsarten mit diesem Leuchtmuster ausgeführt werden. Zusätzlich kann noch im Rahmen der Betriebsartendefinitionsinformationen von dem RFID Schreiber an die RFID Einrichtung 4 eine Farbinformation gesendet werden. Die Farbinformation wird ebenfalls an die Mikrokontrolleinrichtung 2 übertragen. Die Betriebsarten können nun derart definiert werden, dass einer oder mehrere Betriebsarten mit der entsprechenden Farbe ausgeführt werden.

Auf der vertikalen Achse 9 ist zum Beispiel die Helligkeit bzw. die Intensität mit der Amplitude 11 der Mehrfarbensignalanordnung 1 bzw. der Mehrfarben-LED 3 aufgetragen. Auf der horizontalen Achse 10 ist die Zeit in Millisekunden aufgetragen. Bei diesem Leuchtmuster handelt es sich um ein Dauerlicht, welches zum Zeitpunkt t1 eingeschaltet wird.

Wenn zum Beispiel eine Betriebsart derart definiert werden soll, dass die Betriebsart einem roten Dauerlicht entspricht, so werden im Rahmen der Betriebsartendefinitionsinformationen von dem RFID Schreiber an die RFID Einrichtung 4 eine Leuchtmusterinformation gesendet, die dem Leuchtmuster aus der Figur 4 entspricht, und eine Farbinformation, die der Farbe Rot entspricht, gesendet.

Die Betriebsart wird von der Mikrokontrolleinrichtung 2 danach derart definiert, dass die Betriebsart mit dem Leuchtmuster aus Figur 4 in der Farbe Rot ausgeführt wird.

Figur 5 zeigt die Darstellung eines anderen beispielhaften Leuchtmusters. Dieses Leuchtmuster wird im Folgenden auch Blinkmodus 1 genannt. Bei diesem Leuchtmuster leuchtet die Mehrfarben-LED 3 mit konstanter Helligkeit bzw. Intensität 800 ms lang. Darauffolgend wird die Mehrfarben-LED 3 ausgeschaltet und bleibt 800 ms lang ausgeschaltet. Darauffolgend wird die Mehrfarben-LED 3 wieder eingeschaltet und leuchtet wieder 800 ms lang. Danach wird die Mehrfarben-LED 3 wieder ausgeschaltet und bleibt 800 ms lang ausgeschaltet. Dieses Leuchtmuster entspricht einem Blinklicht mit 800 ms Leuchtdauer und 800 ms Pausendauer. Im Übrigen wird auf die Ausführungen zu Figur 4 verwiesen.

Figur 6 zeigt die Darstellung eines anderen beispielhaften Leuchtmusters. Dieses Leuchtmuster wird im Folgenden auch Blinkmodus 2 genannt. Bei diesem Leuchtmuster leuchtet die Mehrfarben-LED 3 mit konstanter Helligkeit bzw. Intensität 400 ms lang. Darauffolgend wird die Mehrfarben-LED 3 ausgeschaltet und bleibt 400 ms lang ausgeschaltet. Darauffolgend wird die Mehrfarben-LED 3 wieder eingeschaltet und leuchtet wieder 400 ms lang. Danach wird die Mehrfarben-LED 3 wieder ausgeschaltet und bleibt 400 ms lang ausgeschaltet. Dieses Leuchtmuster entspricht einem Blinklicht mit 400 ms Leuchtdauer und 400 ms Pausendauer. Im Übrigen wird auf die Ausführungen zu Figur 4 verwiesen.

Figur 7 zeigt die Darstellung eines anderen beispielhaften Leuchtmusters. Dieses Leuchtmuster wird im Folgenden auch Blinkmodus 3 genannt. Bei diesem Leuchtmuster leuchtet die Mehrfarben-LED 3 mit konstanter Helligkeit bzw. Intensität 200 ms lang. Darauffolgend wird die Mehrfarben-LED 3 ausgeschaltet und bleibt 200 ms lang ausgeschaltet. Darauffolgend wird die Mehrfarben-LED 3 wieder eingeschaltet und leuchtet wieder 200 ms lang. Danach wird die Mehrfarben-LED 3 wieder ausgeschaltet und bleibt 200 ms lang ausgeschaltet. Dieses Leuchtmuster entspricht einem Blinklicht mit 200 ms Leuchtdauer und 200 ms Pausendauer. Im Übrigen wird auf die Ausführungen zu Figur 4 verwiesen.

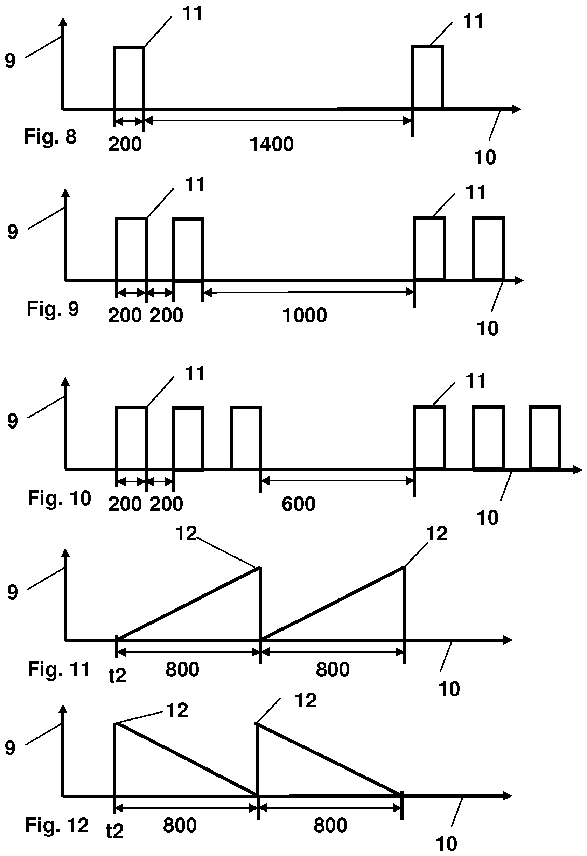

Figur 8 zeigt die Darstellung eines anderen beispielhaften Leuchtmusters. Dieses Leuchtmuster wird im Folgenden auch Pulsmodus 1 genannt. Bei diesem Leuchtmuster leuchtet die Mehrfarben-LED 3 200 ms lang. Danach wird die Mehrfarben-LED 3 ausgeschaltet und bleibt für 1400 ms ausgeschaltet. Danach wird die Mehrfarben-LED 3 eingeschaltet und leuchtet 200 ms lang. Danach wird die Mehrfarben-LED 3 ausgeschaltet und bleibt für 1400 ms ausgeschaltet. Dieses Leuchtmuster entspricht einem Pulsmodus mit 200 ms Pulslänge bzw. Pulsdauer. Im Übrigen wird auf die Ausführungen zu Figur 4 verwiesen.

Figur 9 zeigt die Darstellung eines anderen beispielhaften Leuchtmusters. Dieses Leuchtmuster wird im Folgenden auch Pulsmodus 2 genannt. Bei diesem Leuchtmuster leuchtet die Mehrfarben-LED 3 200 ms lang. Danach wird die Mehrfarben-LED 3 ausgeschaltet und bleibt für 200 ms ausgeschaltet. Danach wird die Mehrfarben-LED 3 eingeschaltet und leuchtet 200 ms lang. Danach wird die Mehrfarben-LED 3 ausgeschaltet und bleibt für 1000 ms ausgeschaltet. Dieses Muster wird danach wiederholt. Dieses Leuchtmuster entspricht einem Pulsmodus mit zwei Pulsen mit 200 ms Pulslänge bzw. Pulsdauer und einer Pause zwischen den Pulsen von 200 ms. Im Übrigen wird auf die Ausführungen zu Figur 4 verwiesen.

Figur 10 zeigt die Darstellung eines anderen beispielhaften Leuchtmusters. Dieses Leuchtmuster wird im Folgenden auch Pulsmodus 3 genannt. Bei diesem Leuchtmuster leuchtet die Mehrfarben-LED 3 200 ms lang. Danach wird die Mehrfarben-LED 3 ausgeschaltet und bleibt für 200 ms ausgeschaltet. Danach wird die Mehrfarben-LED 3 eingeschaltet und leuchtet 200 ms lang. Danach wird die Mehrfarben-LED 3 ausgeschaltet und bleibt für 200 ms ausgeschaltet. Danach wird die Mehrfarben-LED 3 eingeschaltet und leuchtet 200 ms lang. Danach wird die Mehrfarben-LED 3 ausgeschaltet und bleibt für 600 ms ausgeschaltet. Dieses Muster wird danach wiederholt. Dieses Leuchtmuster entspricht einem Pulsmodus mit drei Pulsen mit 200 ms Pulslänge bzw. Pulsdauer und einer Pause zwischen den Pulsen von 200 ms. Im Übrigen wird auf die Ausführungen zu Figur 4 verwiesen.

Figur 11 zeigt die Darstellung eines anderen beispielhaften Leuchtmusters. Dieses Leuchtmuster wird im Folgenden auch Glühmodus 1 genannt. Ab dem Zeitpunkt t2 steigt die Helligkeit bzw. Intensität der Mehrfarben-LED 3 innerhalb von 800 ms linear von 0 auf einen Maximalwert 12 an. Nach Erreichen des Maximalwerts 12 wird die Mehrfarben-LED 3 ausgeschaltet. Sofort im Anschluss steigt die Helligkeit bzw. Intensität der Mehrfarben-LED 3 wieder innerhalb von 800 ms von 0 linear auf den Maximalwert 12 an. Dieses Muster wiederholt sich darauffolgend. Im Übrigen wird auf die Ausführungen zu Figur 4 verwiesen.

Figur 12 zeigt die Darstellung eines anderen beispielhaften Leuchtmusters. Dieses Leuchtmuster wird im Folgenden auch Glühmodus 2 genannt. Ab dem Zeitpunkt t2 nimmt die Helligkeit bzw. Intensität der Mehrfarben-LED 3 innerhalb von 800 ms linear vom Maximalwert 12 bis auf 0 ab. Nach Erreichen der 0 wird die Mehrfarben-LED 3 wieder auf den Maximalwert 12 geschaltet. Sofort im Anschluss nimmt die Helligkeit bzw. Intensität der Mehrfarben-LED 3 wieder innerhalb von 800 ms vom Maximalwert 12 bis auf 0 ab. Dieses Muster wiederholt sich darauffolgend. Im Übrigen wird auf die Ausführungen zu Figur 4 verwiesen.

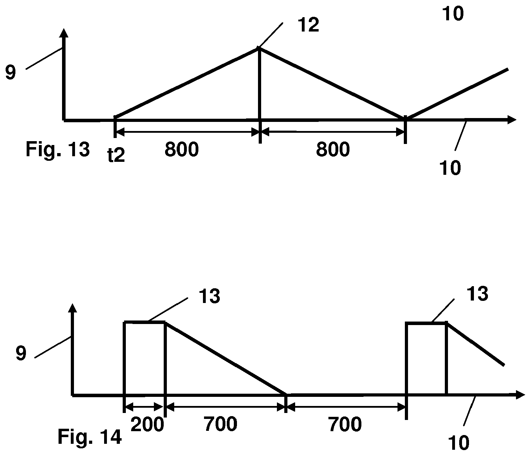

Figur 13 zeigt schematisch die Darstellung eines anderen beispielhaften Leuchtmusters. Dieses Leuchtmuster wird im Folgenden auch Glühmodus 3 genannt. Ab dem Zeitpunkt t2 steigt die Helligkeit bzw. Intensität der Mehrfarben-LED 3 innerhalb von 800 ms linear von 0 auf den Maximalwert 12 an. Nach Erreichen des Maximalwerts 12 nimmt die Helligkeit bzw. Intensität der Mehrfarben-LED 3 innerhalb von 800 ms linear vom Maximalwert 12 bis auf 0 ab. Dieses Muster wiederholt sich darauffolgend. Im Übrigen wird auf die Ausführungen zu Figur 4 verwiesen.

Figur 14 zeigt schematisch die Darstellung eines anderen beispielhaften Leuchtmusters. Dieses Leuchtmuster wird im Folgenden auch Spezialeffekt genannt. Zunächst leuchtet die Mehrfarben-LED 3 200 ms lang mit einer Amplitude 13. danach nimmt die Helligkeit bzw. Intensität der Mehrfarben-LED 3 innerhalb von 700 ms linear bis auf 0 ab. Danach bleibt die Mehrfarben-LED 3 700 ms lang ausgeschaltet. Dieses Muster wiederholt sich danach. Im Übrigen wird auf die Ausführungen zu Figur 4 verwiesen. Es kann weiterhin vorgesehen sein, dass zusätzlich Farbinformationen gegeben werden. Hier könnte zum Beispiel die Mehrfarben-LED 3 während der Amplitude 13 in weiß leuchten. Danach, wenn die Helligkeit bzw. Intensität linear abnimmt, kann die Mehrfarben-LED 3 zum Beispiel blau leuchten. Auf diese Weise können auch Spezialeffekte definiert werden. Solche Spezialeffekte können zum Beispiel auch bereits in der Mikrokontrolleinrichtung 2 gespeichert sein. Wenn in diesem Falle die Betriebsartendefinitionsinformationen eine Spezialeffektinformation enthalten, kann die Spezialeffektinformation dem gespeicherten Spezialeffekt zugeordnet werden und die Betriebsart durch diesen Spezialeffekt definiert werden.

Die folgende Tabelle zeigt beispielhaft eine Übersicht über die Parameter bzw. Informationen, die im Rahmen der Betriebsartendefinitionsinformationen von einem RFID Schreiber an die RFID Einrichtung 4 übertragen werden können. In der linken Spalte stehen die verschiedenen Farben wie zum Beispiel Violett, Blau, Grün usw. In der rechten Spalte stehen die unterschiedlichen Leuchtmuster, die an die RFID Einrichtung 4 übertragen werden können. In diesem Beispiel handelt es sich bei den Leuchtmustern um die Leuchtmuster, die in den Figuren 4 bis 14 definiert bzw. beschrieben worden sind.

**Tab. 2: Farbinformationen und Leuchtmusterinformation**

| **Farbinformation** | **Leuchtmusterinformation** |
|---|---|
| Violett | (AN) Dauerlicht an |
| Blau | (AUS) Dauerlicht aus |
| Hellblau | Blinkmodus 1 |
| Grün | Blinkmodus 2 |
| Gelb | Blinkmodus 3 |
| Orange | Pulsmodus 1 |
| Rot | Pulsmodus 2 |
| | Pulsmodus 3 |
| | Glühmodus 1 |
| | Glühmodus 2 |
| | Glühmodus 3 |

Alternativ oder zusätzlich können auch Spezialeffekte (im Folgenden auch mit SE abgekürzt) ausgewählt werden, die bereits in der Mehrfarbensignalanordnung 1 bzw. in der Mikrokontrolleinrichtung 2 gespeichert sind. Dazu muss in den Betriebsartendefinitionsinformationen eine Spezialeffektinformation an die RFID Einrichtung 4 übertragen werden. In diesem Fall muss keine Farbinformation und auch keine Leuchtmusterinformation sondern lediglich die Spezialeffektinformation an die RFID Einrichtung 4 übertragen werden, weil der dazugehörige Spezialeffekt bereits in der Mikrokontrolleinrichtung 2 gespeichert ist. Anhand dieser Spezialeffektinformation wählt die Mikrokontrolleinrichtung 2 den zugehörigen gespeicherten Spezialeffekt aus und ordnet diesen Spezialeffekt der Betriebsart zu. In der folgenden Tab. 3 sind vier Beispiele für Spezialeffekte angegeben.

**Tab. 3: Spezialeffekte**

| **Spezialeffekt** |
|---|
| (SE1) Spezialeffekt mit hellem kurzen Blitz und Blau nach dem Glimmen |
| (SE2) Spezialeffekt mit hellem kurzen Blitz und Rot nach dem Glimmen |
| (SE3) Spezialeffekt mit hellem kurzen Blitz und Grün nach dem Glimmen |
| (SE4) Spezialeffekt mit hellem kurzen Blitz und Gelb nach dem Glimmen |

In der folgenden Tab. 4 ist eine Übersicht über einen definierten Betriebsartensatz dargestellt. In der linken Spalte ist die Nummer des Steuersignals angegeben. In der zweiten Spalte von Links ist die Nummer der Betriebsart angegeben. In der dritten Spalte von Links ist der Inhalt der Farbinformationen bzw. der Spezialeffektinformation angegeben, die im Rahmen der Betriebsartendefinitionsinformationen an die RFID Einheit 4 übertragen werden. In den letzten beiden Zeilen, die sich auf die Betriebsarten Nr. 9 und 10 beziehen, ist anstelle der Farbinformation die Nummer des entsprechenden Spezialeffekts SE1 bzw. SE2 angegeben, der der Betriebsart 9 bzw. 10 zugeordnet worden ist. In diesem Falle, d.h. für die Betriebsarten 9 und 10, wird keine Farbinformation und auch keine Leuchtmusterinformation übertragen, da die entsprechenden Spezialeffekte bereits in der Mikrokontrolleinrichtung 2 gespeichert sind. Für diese Betriebsarten 9 und 10 wird nur die Spezialeffektinformation übertragen. In der rechten Spalte ist die Leuchtmusterinformation angegeben, die im Rahmen der Betriebsartendefinitionsinformationen an die RFID Einrichtung 4 übertragen werden.

**Tab. 4: Beispielhafte Definitionen von Betriebsarten**

| Steuersignal Nr. | Betriebsart | Farb-/Spezialeffektinformation | Leuchtmusterinformation |
|---|---|---|---|
| 0 | LED Aus | --- | --- |
| 1 | 1 | Blau | Dauerlicht |
| 2 | 2 | Blau | Blinkmodus 1 |
| 3 | 3 | Grün | Dauerlicht |
| 4 | 4 | Grün | Blinkmodus 1 |
| 5 | 5 | Rot | Glühmodus 1 |
| 6 | 6 | Gelb | Dauerlicht |
| 7 | 7 | Gelb | Blinkmodus 1 |
| 8 | 8 | Blau | Pulsmodus 1 |
| 9 | 9 | Spezialeff. SE1 | --- |
| 10 | 10 | Spezialeff. SE2 | --- |

In der ersten Zeile ist die Betriebsart "Aus-Modus" bzw. "LED Aus" dargestellt. Diese Betriebsart ist dem Steuersignal 0 bzw. Nr. 0 zugeordnet. Dieser Betriebsart sind weiterhin keine Farbinformation und auch keine Leuchtmusterinformation zugeordnet. Bei der Betriebsart LED Aus leuchtet die Mehrfarben-LED nicht sondern bleibt ausgeschaltet.

Zur Definition der Betriebsarten werden in diesem Beispiel von dem RFID Schreiber an die RFID Einrichtung 4 folgende Informationen übertragen. Im Rahmen der Betriebsartendefinitionsinformationen wird die Nummer der Betriebsart übermittelt, die definiert werden soll. Darauf folgend wird die Farbinformation und die Leuchtmusterinformation bzw. Spezialeffektinformation an die RFID Einrichtung 4 übertragen, die der zu definierenden Betriebsart zugeordnet werden sollen. Zur Definition zum Beispiel der Betriebsart 5 muss im Rahmen der Betriebsartendefinitionsinformationen zunächst die Betriebsart 5 als die zu definierende Betriebsart angegeben werden. Außerdem muss die Farbinformation "rot" und die Leuchtmusterinformation "Glühmodus 1" übertragen werden. Zur Definition zum Beispiel der Betriebsart 10 muss im Rahmen der Betriebsartendefinitionsinformationen zunächst die Betriebsart 10 als die zu definierende Betriebsart angegeben werden. Außerdem muss die Spezialeffektinformation mit dem Inhalt SE2 bzw. Spezialeffekt 2 übertragen werden. In der Mikrokontrolleinrichtung 2 ist der Spezialeffekt 2 gespeichert und der Spezialeffekt 2 wird der Betriebsart 10 zugeordnet bzw. die Betriebsart 10 wird durch den Spezialeffekt 2 definiert.

Nachdem alle Betriebsarten 1 bis 10 über die RFID Einrichtung 4 definiert worden sind, ist der Funktionsablauf in der Mehrfarbensignalanordnung 1 wie folgt. Die Mehrfarbensignalanordnung 1 bzw. die Eingangsschnittstelle 5 empfängt zum Beispiel von einem intelligenten Schaltgerät ein pulsweitenmoduliertes Steuersignal, wie zum Beispiel das Steuersignal 4 bzw. Nr. 4. In der Mikrokontrolleinrichtung 2 ist dem Steuersignal 4 die Betriebsart 4 zugeordnet. Die Betriebsart 4 ist zuvor über die RFID Einrichtung 4 mit der Farbinformation "Grün" und der Leuchtmusterinformation "Blinkmodus 1" definiert worden. Nach Erhalt des Steuersignals 4 betreibt die Mikrokontrolleinrichtung 2 die Mehrfarben-LED 3 somit in der Betriebsart 4, so dass die Mehrfarben-LED 3 Grün blinkt, wobei die Mehrfarben-LED 3 800 ms lang Grün leuchtet, danach 800 ms lang ausgeschaltet ist, danach wieder 800 ms lang Grün leuchtet usw.

Es ist weiterhin möglich, dass die Betriebsarten mehrfach definiert d.h. umdefiniert oder verändert werden können. Wenn zum Beispiel in der Betriebsart 4 die Mehrfarben-LED 3 nicht mehr Grün sondern Rot blinken soll, so kann über die RFID Einrichtung 4 im Rahmen der Betriebsartendefinitionsinformationen eine Farbinformation mit dem Inhalt "rot" für die Betriebsart 4 gesendet werden, so dass die Farbe der Betriebsart 4 geändert werden kann.

Die vorhergehenden Beispiele dienen lediglich der Veranschaulichung und Erklärung der vorliegenden Erfindung. Die Beispiele schränken jedoch den Gegenstand der Anmeldung in keiner Weise ein.

### Bezugszeichenliste

- 1: Mehrfarbensignalanordnung
- 2: Mikrokontrolleinrichtung
- 3: Mehrfarben-LED
- 4: RFID Einrichtung
- 5: Eingangsschnittstelle
- 6, 7: Achse
- 8: Amplitude
- 9, 10: Achse
- 11, 13: Amplitude
- 12: Maximalwert

## Patentansprüche

1. Mehrfarbensignalanordnung (1), aufweisend eine Mehrfarben-LED (3), eine Mikrokontrolleinrichtung (2) und eine Eingangsschnittstelle (5), wobei die Mehrfarbensignalanordnung (1) derart konfiguriert ist, dass die Eingangsschnittstelle (5) pulsweitenmodulierte Steuersignale empfängt, wobei die Mehrfarben-LED (3) in einer ersten Betriebsart betrieben wird, wenn die Eingangsschnittstelle (5) ein erstes Steuersignal empfängt, wobei die Mehrfarben-LED (3) in einer zweiten Betriebsart betrieben wird, wenn die Eingangsschnittstelle (5) ein zweites Steuersignal empfängt, **dadurch gekennzeichnet, dass** die Mehrfarbensignalanordnung (1) eine RFID Einrichtung (4) aufweist, wobei die Mehrfarbensignalanordnung (1) derart konfiguriert ist, dass die RFID Einrichtung (4) Betriebsartendefinitionsinformationen empfängt, dass die Betriebsartendefinitionsinformationen an die Mikrokontrolleinrichtung (2) übertragen werden und dass die Mikrokontrolleinrichtung (2) die Betriebsarten in Abhängigkeit der Betriebsartendefinitionsinformationen definiert.

2. Mehrfarbensignalanordnung (1) nach Anspruch 1, **dadurch gekennzeichnet, dass** die Betriebsartendefinitionsinformationen eine Farbinformation umfassen.

3. Mehrfarbensignalanordnung (1) nach einem der vorhergehenden Ansprüche, **dadurch gekennzeichnet, dass** die Betriebsartendefinitionsinformationen eine Leuchtmusterinformation umfassen.

4. Mehrfarbensignalanordnung (1) nach einem der vorhergehenden Ansprüche, **dadurch gekennzeichnet, dass** die Mehrfarbensignalanordnung (1) derart konfiguriert ist, dass in der Mikrokontrolleinrichtung (2) vorgegebene Leuchtmuster, Farben und/oder Spezialeffekte gespeichert sind, wobei die Betriebsartendefinitionsinformationen eine Zuordnungsinformation umfassen, wobei die Mikrokontrolleinrichtung (2) der Zuordnungsinformation ein gespeichertes Leuchtmuster, eine gespeicherte Farbe und/oder einen gespeicherten Spezialeffekt zuordnet, wobei die Mikrokontrolleinrichtung (2) die Betriebsart durch das zugeordnete Leuchtmuster, die zugeordnete Farbe und/oder den

5. Mehrfarbensignalanordnung (1) nach Anspruch 4, **dadurch gekennzeichnet, dass** die Zuordnung der Zuordnungsinformation zu dem gespeicherten Leuchtmuster, der gespeicherten Farbe und/oder dem gespeicherten Spezialeffekt über eine Nachschautabelle erfolgt.

6. Mehrfarbensignalanordnung (1) nach einem der vorhergehenden Ansprüche, **dadurch gekennzeichnet, dass** die Betriebsartendefinitionsinformationen einen Datensatz umfassen, wobei der Datensatz eine Betriebsartidentifikationsinformation, eine Farbinformation, eine Leuchtmusterinformation und/oder eine Zuordnungsinformation umfasst.

7. Mehrfarbensignalanordnung (1) nach einem der vorhergehenden Ansprüche, **dadurch gekennzeichnet, dass** die RFID Einrichtung (4) als NFC Einrichtung ausgebildet ist.

8. Mehrfarbensignalanordnung (1) nach einem der vorhergehenden Ansprüche, **dadurch gekennzeichnet, dass** die Betriebsarten über die RFID Einrichtung (4) mehrmalig definierbar und/oder veränderbar sind.

9. Mehrfarbensignalanordnung (1) nach einem der vorhergehenden Ansprüche, **dadurch gekennzeichnet, dass** die Mehrfarbensignalanordnung (1) derart konfiguriert ist, dass die RFID Einrichtung (4) zusätzlich Steuersignaldefinitionsinformationen empfängt, die RFID Einrichtung (4) die Steuersignaldefinitionsinformationen an die Mikrokontrolleinrichtung (2) sendet und die Steuersignale in Abhängigkeit der Steuersignaldefinitionsinformationen definiert und/oder verändert werden.

10. Mehrfarbensignalanordnung (1) nach einem der vorhergehenden Ansprüche, **dadurch gekennzeichnet, dass** die RFID Einrichtung (4) als Mikrochip ausgebildet ist.

11. Mehrfarbensignalanordnung (1) nach einem der vorhergehenden Ansprüche, **dadurch gekennzeichnet, dass** die RFID Einrichtung (4) und die Mikrokontrolleinrichtung (2) auf einer gemeinsamen Leiterplatte in einem gemeinsamen Gehäuse angeordnet sind.

12. Verfahren zur Definition von Betriebsarten einer Mehrfarbensignalanordnung (1), aufweisend eine Mehrfarben-LED (3), eine Mikrokontrolleinrichtung (2) und eine Eingangsschnittstelle (5), wobei die Eingangsschnittstelle (5) pulsweitenmodulierte Steuersignale empfängt, wobei die Mehrfarben-LED (3) in einer ersten Betriebsart betrieben wird, wenn die Eingangsschnittstelle (5) ein erstes Steuersignal empfängt, wobei die Mehrfarben-LED (3) in einer zweiten Betriebsart betrieben wird, wenn die Eingangsschnittstelle (5) ein zweites Steuersignal empfängt, **dadurch gekennzeichnet, dass** die Mehrfarbensignalanordnung (1) eine RFID Einrichtung (4) aufweist, wobei die RFID Einrichtung (4) Betriebsartendefinitionsinformationen empfängt, wobei die Betriebsartendefinitionsinformationen an die Mikrokontrolleinrichtung (2) übertragen werden und die Mikrokontrolleinrichtung (2) die Betriebsarten in Abhängigkeit der Betriebsartendefinitionsinformationen definiert.

13. System, aufweisend eine Mehrfarbensignalanordnung (1) nach einem der Ansprüche 1 bis 11 und eine RFID Sendeeinrichtung, wobei die RFID Sendeeinrichtung derart konfiguriert ist, dass sie die Betriebsartendefinitionsinformationen an die RFID Einrichtung (4) sendet.

## Claims

1. Multicolour signal arrangement (1), including a multicolour LED (3), a microcontroller device (2) and an input interface (5), wherein the multicolour signal arrangement (1) is configured in such a way that the input interface (5) receives pulse width modulated control signals, wherein the multicolour LED (3) is operated in a first operating mode when the input interface (5) receives a first control signal, wherein the multicolour LED (3) is operated in a second operating mode when the input interface (5) receives a second control signal, **characterised in that** the multicolour signal arrangement (1) includes a RFID device (4), wherein the multicolour signal arrangement (1) is configured in such a way that the RFID device (4) receives operating mode definition information, the operating mode definition information is transmitted to the microcontroller device (2), and the microcontroller device (2) defines the operating modes as a function of the operating mode definition information.

2. Multicolour signal arrangement (1) according to claim 1, **characterised in that** the operating mode definition information comprises colour information.

3. Multicolour signal arrangement (1) according to one of the preceding claims, **characterised in that** the operating mode definition information includes light pattern information.

4. Multicolour signal arrangement (1) according to one of the preceding claims, **characterised in that** the multicolour signal arrangement (1) is configured in such a way that predefined light patterns, colours, and/or special effects are stored in the microcontroller device (2), wherein the operating mode definition information includes assignment information, wherein the microcontroller device (2) assigns a stored light pattern, a stored colour and/or a stored special effect to the assignment information, wherein the microcontroller device (2) defines the operating mode by the assigned light pattern, the assigned colour and/or the assigned special effect.

5. Multicolour signal arrangement according to claim 4, **characterised in that** the assignment of the assignment information to the stored light pattern, the stored colour and/or the stored special effect takes place using a look-up table.

6. Multicolour signal arrangement (1) according to one of the preceding claims, **characterised in that** the operating mode definition information comprises a data set, wherein the data set comprises operating mode identification information, colour information, light pattern information and/or assignment information.

7. Multicolour signal arrangement (1) according to one of the preceding claims, **characterised in that** the RFID device (4) is designed as an NFC device.

8. Multicolour signal arrangement (1) according to one of the preceding claims, **characterised in that** the operating modes can be defined and/or modified multiple times using the RFID device (4).

9. Multicolour signal arrangement (1) according to one of the preceding claims, **characterised in that** the multicolour signal arrangement (1) is configured in such a way that the RFID device (4) additionally receives control signal definition information, the RFID device (4) sends the control signal definition information to the microcontroller device (2) and the control signals are defined and/or modified as a function of the control signal definition information.

10. Multicolour signal arrangement (1) according to one of the preceding claims, **characterised in that** the RFID device (4) is designed as a microchip.

11. Multicolour signal arrangement (1) according to one of the preceding claims, **characterised in that** the RFID device (4) and the microcontroller device (2) are arranged on a common printed circuit board in a common housing.

12. Method of defining operating modes of a multicolour signal arrangement (1), including a multicolour LED (3), a microcontroller device (2) and an input interface (5), wherein the input interface (5) receives pulse width modulated control signals, wherein the multicolour LED (3) is operated in a first operating mode when the input interface (5) receives a first control signal, wherein the multicolour LED (3) is operated in a second operating mode when the input interface (5) receives a second control signal, **characterised in that** the multicolour signal arrangement (1) comprises an RFID device (4), wherein the RFID device (4) receives operating mode definition information, wherein the operating mode definition information is transmitted to the microcontroller device (2) and the microcontroller device (2) defines the operating modes as a function of the operating mode definition information.

13. System, comprising a multicolour signal arrangement (1) according to one of claims 1 to 11 and an RFID transmission device, wherein the RFID transmission device is configured in such a way that it sends the operating mode definition information to the RFID device (4).

## Revendications

1. Dispositif de signalisation à plusieurs couleurs (1), comportant une LED polychrome (3), un dispositif microcontrôleur (2) et une interface d'entrée (5), dans lequel le dispositif de signalisation à plusieurs couleurs (1) est configuré de telle sorte que l'interface d'entrée (5) reçoit des signaux de commande à largeur d'impulsion modulée, dans lequel la LED polychrome (3) est exploitée dans un premier mode de fonctionnement lorsque l'interface d'entrée (5) reçoit un premier signal de commande, dans lequel la LED polychrome (3) est exploitée dans un deuxième mode de fonctionnement lorsque l'interface d'entrée (5) reçoit un deuxième signal de commande, **caractérisé en ce que** le dispositif de signalisation à plusieurs couleurs (1) comporte un dispositif RFID (4), le dispositif de signalisation à plusieurs couleurs (1) étant configuré de telle sorte que le dispositif RFID (4) reçoit des informations de définition de mode de fonctionnement, que les informations de définition de mode de fonctionnement sont transmises au dispositif microcontrôleur (2) et que le dispositif microcontrôleur (2) définit les modes de fonctionnement en fonction des informations de définition de mode de fonctionnement.

2. Dispositif de signalisation à plusieurs couleurs (1) selon la revendication 1, **caractérisé en ce que** les informations de définition de mode de fonctionnement comprennent une information de couleur.

3. Dispositif de signalisation à plusieurs couleurs (1) selon l'une des revendications précédentes, **caractérisé en ce que** les informations de définition de mode de fonctionnement comprennent une information de motif d'éclairage.

4. Dispositif de signalisation à plusieurs couleurs (1) selon l'une des revendications précédentes, **caractérisé en ce que** le dispositif de signalisation à plusieurs couleurs (1) est configuré de telle sorte que des motifs d'éclairage, couleurs et/ou effets spéciaux prédéterminés sont mémorisés dans le dispositif microcontrôleur (2), les informations de définition de mode de fonctionnement comprenant une information d'association, le dispositif microcontrôleur (2) associant à l'information d'association un motif d'éclairage mémorisé, une couleur mémorisée et/ou un effet spécial mémorisé, le dispositif microcontrôleur (2) définissant le mode de fonctionnement par le motif d'éclairage associé, par la couleur associée et/ou par l'effet spécial associé.

5. Dispositif de signalisation à plusieurs couleurs (1) selon la revendication 4, **caractérisé en ce que** l'association de l'information d'association au motif d'éclairage mémorisé, à la couleur mémorisée et/ou à l'effet spécial mémorisé s'effectue par l'intermédiaire d'un tableau de contrôle.

6. Dispositif de signalisation à plusieurs couleurs (1) selon l'une des revendications précédentes, **caractérisé en ce que** les informations de définition de mode de fonctionnement comprennent un jeu de données, le jeu de données comprenant une information d'identification de mode de fonctionnement, une information de couleur, une information de motif d'éclairage et/ou une information d'association.

7. Dispositif de signalisation à plusieurs couleurs (1) selon l'une des revendications précédentes, **caractérisé en ce que** le dispositif RFID (4) est conçu comme un dispositif NFC.

8. Dispositif de signalisation à plusieurs couleurs (1) selon l'une des revendications précédentes, **caractérisé en ce que** les modes de fonctionnement peuvent être définis et/ou modifiés plusieurs fois par l'intermédiaire du dispositif RFID (4).

9. Dispositif de signalisation à plusieurs couleurs (1) selon l'une des revendications précédentes, **caractérisé en ce que** le dispositif de signalisation à plusieurs couleurs (1) est configuré de telle sorte que le dispositif RFID (4) reçoit en outre des informations de définition de signal de commande, que le dispositif RFID (4) envoie les informations de définition de signal de commande au dispositif microcontrôleur (2) et que les signaux de commande sont définis et/ou modifiés en fonction des informations de définition de signal de commande.

10. Dispositif de signalisation à plusieurs couleurs (1) selon l'une des revendications précédentes, **caractérisé en ce que** le dispositif RFID (4) est conçu comme une micropuce.

11. Dispositif de signalisation à plusieurs couleurs (1) selon l'une des revendications précédentes, **caractérisé en ce que** le dispositif RFID (4) et le dispositif microcontrôleur (2) sont agencés sur une carte à circuits imprimés commune dans un boîtier commun.

12. Procédé de définition de modes de fonctionnement d'un dispositif de signalisation à plusieurs couleurs (1), comportant une LED polychrome (3), un dispositif microcontrôleur (2) et une interface d'entrée (5), dans lequel l'interface d'entrée (5) reçoit des signaux de commande à largeur d'impulsion modulée, dans lequel la LED polychrome (3) est exploitée dans un premier mode de fonctionnement lorsque l'interface d'entrée (5) reçoit un premier signal de commande, dans lequel la LED polychrome (3) est exploitée dans un deuxième mode de fonctionnement lorsque l'interface d'entrée (5) reçoit un deuxième signal de commande, **caractérisé en ce que** le dispositif de signalisation à plusieurs couleurs (1) comporte un dispositif RFID (4), le dispositif RFID (4) recevant des informations de définition de mode de fonctionnement, les informations de définition de mode de fonctionnement étant transmises au dispositif microcontrôleur (2) et le dispositif microcontrôleur (2) définissant les modes de fonctionnement en fonction des informations de définition de mode de fonctionnement.

13. Système, comportant un dispositif de signalisation à plusieurs couleurs (1) selon l'une des revendications 1 à 11 et un dispositif émetteur RFID, le dispositif émetteur RFID étant configuré de telle sorte qu'il envoie les informations de définition de mode de fonctionnement au dispositif RFID (4).
